# EUROPEAN PATENT APPLICATION

(11) **EP 3 255 572 A1**
(43) Date of publication of application: **13.12.2017**
(21) Application number: 17154929.8
(22) Date of filing: 07.02.2017
(51) Int. Cl.: G06F 17/50, B33Y 50/00, B63B 1/00, B63B 9/00

(54) **THREE-DIMENSIONAL PRINTING SYSTEM AND INFORMATION PROCESSING APPARATUS**

(30) Priority: 08.06.2016 JP 2016114906
(71) Applicant: Fluid Techno Co., Ltd., Sasebo-shi, Nagasaki 857-0053 (JP)
(72) Inventor: TAMASHIMA, Masahiro, Sasebo-shi, Nagasaki 857-0053 (JP); HISAMURA, Kenichiro, Sasebo-shi, Nagasaki 857-0053 (JP)
(74) Representative: TBK

(57) **Abstract**

A three-dimensional modeling system (1) includes a three-dimensional modeling apparatus (3) that models a three-dimensional object, and an information processing apparatus (2) that transmits information about a three-dimensional object to be modeled to the three-dimensional modeling apparatus (3). The information processing apparatus (2) includes modeling data generating means (203) for generating modeling data based on three-dimensional object shape data (31) representing a three-dimensional shape of a predetermined three-dimensional object and based on streamline shape data (32) of a streamline representing fluid flow around the predetermined three-dimensional object, the modeling data being for modeling, by the three-dimensional modeling apparatus (3), a three-dimensional object including the predetermined three-dimensional object and the streamline, and data transmitting means (204) for transmitting the modeling data to the three-dimensional modeling apparatus (3), the modeling data being generated by the modeling data generating means (203).

## Description

### BACKGROUND OF THE INVENTION

### (1) Field of the Invention

The present invention relates to a three-dimensional modeling system and an information processing apparatus.

### (2) Description of Related Art

In recent years, the regulation of exhaust gasses such as CO₂ emitted from vessels has been enhanced. To deal with such exhaust gas regulation, further energy-saving design of a hull form is sought.

In general, hull form design is performed in the following steps. Specifically, first, a hull form is designed by creation of a line drawing by two-dimensional computer aided design (CAD) and creation of a three-dimensional model by three-dimensional CAD (see, for example, JP H11-99987 A).

JP H11-99987 A describes an integral-type hull shape data generating apparatus that allows interactive giving and receiving of data between an interactive fairing apparatus, an automatic bow and stern rounding apparatus, and a surface modeling apparatus through lines file storage means for line files which are obtained from offsets based on the concept design of a hull. According to the technique of JP H11-99987 A, in creation of a three-dimensional model by three-dimensional CAD, fairing where manual work is eliminated is made possible, enabling to perform high-accuracy surface modeling.

Referring back to the above-described steps for hull form design, when a hull form is designed by creation of a three-dimensional model by three-dimensional CAD, etc., next, a shape of the designed hull form is evaluated using computational fluid dynamics (CFD) analysis, and the hull form is changed as necessary. Thereafter, a model vessel is manufactured in practice based on the designed hull form, and performance is checked by performing tank testing on the model vessel. By repeating the above-described steps, a hull form that satisfies target performance is designed, and construction drawings for a hull shape are created.

Meanwhile, it is very expensive to check performance by tank testing in the above-described hull form design. Hence, it is preferred to reduce the number of repetitions of the above-described steps. Particularly, it is preferred to efficiently perform high-quality hull form design at low cost by rapidly and accurately performing a shape evaluation of a hull form by CFD analysis and by completing tank testing with a single test if possible.

### SUMMARY OF THE INVENTION

The present invention is made in view of the above-described points, and an object of the present invention is to provide a three-dimensional modeling system and an information processing apparatus that are capable of efficiently performing high-quality three-dimensional object design at low cost.

To attain the above-described object, a three-dimensional modeling system according to the present invention includes: a three-dimensional modeling apparatus that models a three-dimensional object; and an information processing apparatus that transmits information about a three-dimensional object to be modeled, to the three-dimensional modeling apparatus. The information processing apparatus includes: modeling data generating means for generating modeling data based on three-dimensional object shape data representing a three-dimensional shape of a predetermined three-dimensional object and based on streamline shape data of a streamline representing fluid flow around the predetermined three-dimensional object, the modeling data being for modeling, by the three-dimensional modeling apparatus, a three-dimensional object including the predetermined three-dimensional object and the streamline; and data transmitting means for transmitting the modeling data to the three-dimensional modeling apparatus, the modeling data being generated by the modeling data generating means.

In addition, to attain the above-described object, an information processing apparatus according to the present invention includes: modeling data generating means for generating modeling data based on three-dimensional object shape data representing a three-dimensional shape of a predetermined three-dimensional object and based on streamline shape data of a streamline representing fluid flow around the predetermined three-dimensional object, the modeling data being for modeling, by a three-dimensional modeling apparatus that models a three-dimensional object, a three-dimensional object including the predetermined three-dimensional object and the streamline; and data transmitting means for transmitting the modeling data to the three-dimensional modeling apparatus, the modeling data being generated by the modeling data generating means. The information processing apparatus is configured to transmit information about a three-dimensional object to be modeled, to the three-dimensional modeling apparatus.

According to the present invention, high-quality three-dimensional object design can be efficiently performed at low cost.

### BRIEF DESCRIPTION OF THE DRAWINGS

FIG. 1 shows an exemplary system configuration of a three-dimensional modeling system according to the present embodiment;
FIG. 2 shows an exemplary hardware configuration of a PC according to the present embodiment;
FIG. 3 shows an exemplary functional configuration of the PC according to the present embodiment;
FIG. 4 is a flowchart showing an example of control logic of the PC according to the present embodiment;
FIG. 5 shows exemplary first screen display according to the control logic of the PC according to the present embodiment;
FIG. 6 shows exemplary second screen display according to the control logic of the PC according to the present embodiment;
FIG. 7 shows exemplary third screen display according to the control logic of the PC according to the present embodiment;
FIG. 8 shows exemplary fourth screen display according to the control logic of the PC according to the present embodiment;
FIG. 9 shows a first example of a modeled object obtained by the three-dimensional modeling system according to the present embodiment;
FIG. 10 is a diagram of the modeled object of FIG. 9 as viewed in a direction perpendicular to a support plane;
FIG. 11 shows a second example of a modeled object obtained by the three-dimensional modeling system according to the present embodiment; and
FIG. 12 shows a third example of a modeled object obtained by the three-dimensional modeling system according to the present embodiment.

### DETAILED DESCRIPTION OF PREFERRED EMBODIMENTS

An embodiment of the present invention will be described below.

### System configuration

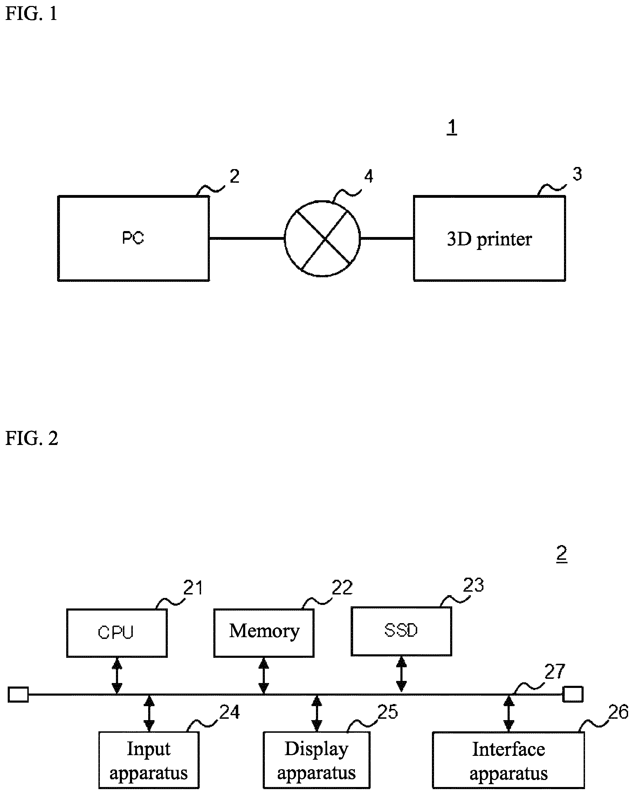

FIG. 1 shows an exemplary system configuration of a three-dimensional modeling system according to the present embodiment. A three-dimensional modeling system 1 shown in FIG. 1 includes a PC 2 and a 3D printer 3 which are connected to each other through a network 4 such as a local area network (LAN) 4.

The PC 2 is a computer apparatus that transmits information about a three-dimensional object to be modeled to the 3D printer 3. The information about a three-dimensional object to be modeled is three-dimensional object shape data representing a three-dimensional shape of a three-dimensional object to be modeled and is, for example, 3D data such as CAD data. The PC 2 corresponds to an information processing apparatus in the claims.

The 3D printer 3 is a three-dimensional modeling apparatus that models a three-dimensional object by layering a material such as resin, based on the information about a three-dimensional object to be modeled which is received from the PC 2. Note that the 3D printer 3 may be of any layering method, e.g., fused deposition modeling, inkjet, or stereolithography.

By the configuration shown above, in the three-dimensional modeling system 1 according to the present embodiment, the PC 2 transmits information about a three-dimensional object to be modeled to the 3D printer 3, and the 3D printer 3 models a three-dimensional object based on the information.

Note that the following description is made assuming that particularly a three-dimensional object including a hull form of a vessel and the flow of fluid (water) around a hull of the hull form is a three-dimensional object to be modeled. Note that the three-dimensional object is not limited to a hull form of a vessel, and may be any other three-dimensional object that serves as a subject of a wind tunnel experiment or tank testing, e.g., a plane's wing or a vehicle body.

### Hardware configuration of PC

FIG. 2 shows an exemplary hardware configuration of the PC according to the present embodiment. Note that in the following description, the same components as those described above are denoted by the same reference numerals and an overlapping description is omitted as appropriate.

The PC 2 shown in FIG. 2 includes a central processing unit (CPU) 21, a memory 22, a solid state drive (SSD) 23, an input apparatus 24, a display apparatus 25, and an interface apparatus 26 which are connected to each other through a bus 27.

The CPU 21 is a central processing unit that executes various types of programs stored in the memory 22. The memory 22 is a storage apparatus such as a random access memory (RAM) that stores programs to be executed by the CPU 21 and data used by the programs. The SSD 23 is a storage apparatus that stores various types of data, etc. Instead of the SSD 23, a hard disk drive (HDD) may be provided. The input apparatus 24 is an apparatus used by a user to input various types of information, e.g., a keyboard and a mouse. The display apparatus 25 is, for example, a display. The interface apparatus 26 is an interface apparatus for establishing a connection with the 3D printer 3 (see FIG. 1) through the network 4, etc.

### Functional configuration of PC

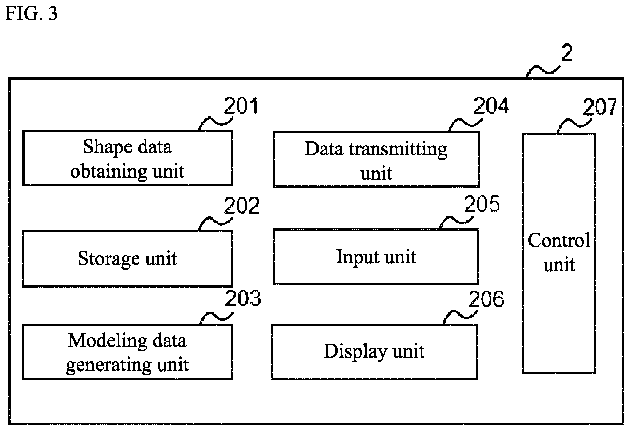

FIG. 3 shows an exemplary functional configuration of the PC according to the present embodiment.

The PC 2 shown in FIG. 3 includes a shape data obtaining unit 201, a storage unit 202, a modeling data generating unit 203, a data transmitting unit 204, an input unit 205, a display unit 206, and a control unit 207.

The shape data obtaining unit 201 obtains three-dimensional object shape data (hereinafter, also referred to as "3D data") representing a three-dimensional shape of a predetermined three-dimensional object (in the present embodiment, a hull form of a vessel) and streamline shape data of streamlines representing fluid flow around a hull of the hull form. The shape data obtaining unit 201 obtains these pieces of shape data by, for example, uploading from a computer apparatus (not shown in FIG. 1) connected thereto through the network 4 and having these pieces of shape data stored therein.

Note that the 3D data as used herein is shape data representing a three-dimensional shape of a hull form of a vessel that is designed in advance on another computer apparatus using three-dimensional CAD and that has been subjected to fairing. The streamline shape data, on the other hand, is shape data representing streamlines representing fluid flow around a hull, i.e., a surface of the hull and in the vicinity of the surface of the hull. The streamline shape data is obtained by performing computational fluid dynamics (CFD) analysis on the 3D data of a hull form.

The storage unit 202 stores shape data such as the three-dimensional object shape data of a hull form and the streamline shape data which are obtained by the shape data obtaining unit 201. In addition, the storage unit 202 also temporarily stores, for example, information inputted on the input unit 205 which will be described later.

The modeling data generating unit 203 generates modeling data for modeling, by the 3D printer 3, a three-dimensional object including a three-dimensional object of a hull form and streamlines, based on the three-dimensional object shape data of a hull form and the streamline shape data of streamlines around a hull of the hull form which are stored in the storage unit 202.

Namely, the modeling data generating unit 203 generates, as modeling data, data of layers where a three-dimensional object including a three-dimensional object of a hull form and streamlines is cut into round slices. In addition, the modeling data generating unit 203 generates control data related to the modeling of a three-dimensional object by the 3D printer 3.

The data transmitting unit 204 transmits the modeling data generated by the modeling data generating unit 203 to the 3D printer 3. Note that the 3D printer 3 models a three-dimensional object by layering a material such as resin, based on the transmitted modeling data.

The input unit 205 accepts, as input, information inputted to the input apparatus 24 (see FIG. 2) by the user. The display unit 206 displays the three-dimensional object shape data of a hull form and the streamline shape data of streamlines around a hull on a screen of the display apparatus 25 (see FIG. 2).

The control unit 207 controls the operation of the shape data obtaining unit 201, the storage unit 202, the modeling data generating unit 203, the data transmitting unit 204, the input unit 205, and the display unit 206.

By the configuration shown above, in the PC 2 according to the present embodiment, the shape data obtaining unit 201 obtains shape data such as three-dimensional object shape data of a hull form and streamline shape data, and the modeling data generating unit 203 generates modeling data for modeling, by the 3D printer 3, a three-dimensional object including a three-dimensional object of a hull form and streamlines, based on these pieces of shape data. Thereafter, the data transmitting unit 204 transmits the modeling data generated by the modeling data generating unit 203 to the 3D printer 3.

Note that of the above-described components, the shape data obtaining unit 201 and the data transmitting unit 204 are implemented by the CPU 21 and the interface apparatus 26 of FIG. 2. The storage unit 202 is implemented by the CPU 21, the memory 22, and the SSD 23 of FIG. 2. The modeling data generating unit 203 is implemented by the CPU 21 of FIG. 2. The input unit 205 is implemented by the CPU 21 and the input apparatus 24 of FIG. 2. The display unit 206 is implemented by the CPU 21 and the display apparatus 25 of FIG. 2. The control unit 207 is implemented by the CPU 21 of FIG. 2.

In addition, although, in the present embodiment, it is configured such that shape data is obtained by the PC 2 (shape data obtaining unit 201) from another computer apparatus, the configuration is not limited thereto. Shape data may be generated on the PC 2.

### Control logic of PC

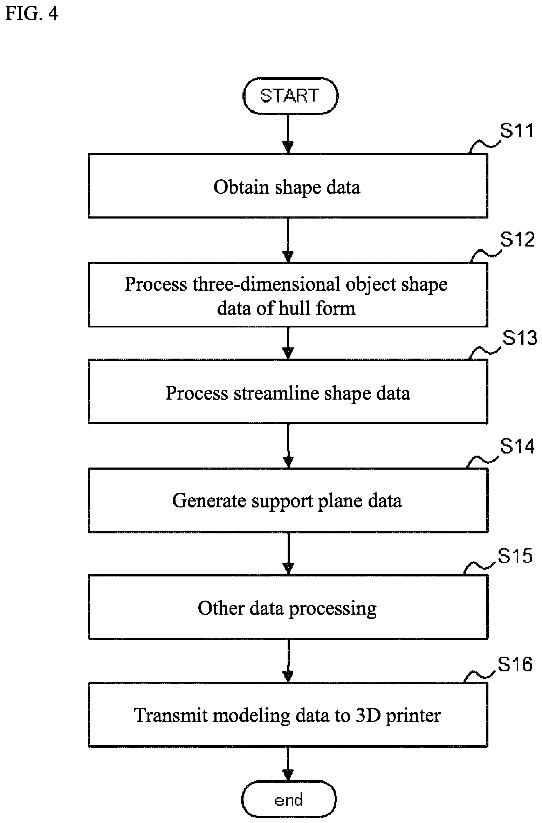

FIG. 4 is a flowchart showing an example of control logic of the PC according to the present embodiment. An example of the processes of the PC 2 will be described below with reference to FIG. 3, etc., as appropriate.

First, at step S11, the shape data obtaining unit 201 obtains shape data including three-dimensional object shape data 31 of a hull form and streamline shape data 32 (S11). The shape data obtained at step S11 is stored in the storage unit 202.

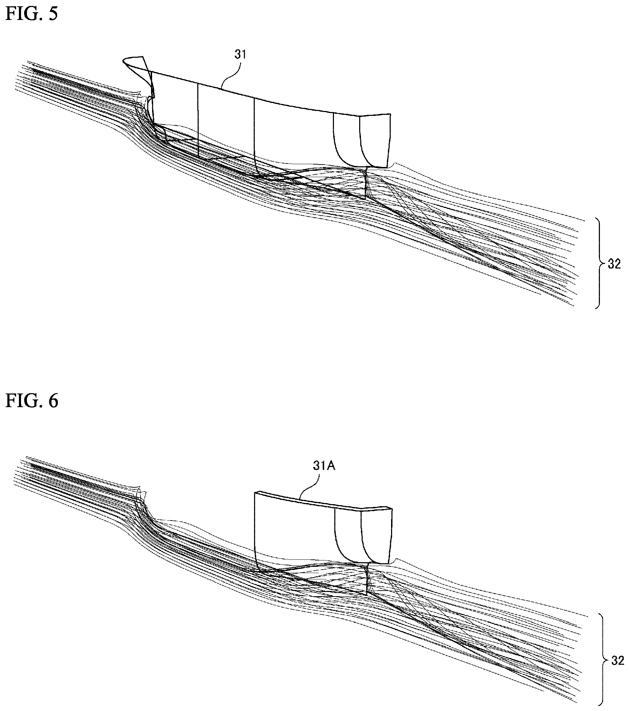

FIG. 5 shows exemplary first screen display according to the control logic of the PC according to the present embodiment. FIG. 5 shows three-dimensional screen display of the three-dimensional object shape data 31 and streamline shape data 32 obtained at step S11. Note that the three-dimensional object shape data 31 shown in FIG. 5 represents a wire-frame model of a part of a vessel.

Returning to FIG. 4, processing proceeds to step S12, and the modeling data generating unit 203 processes the three-dimensional object shape data 31 of a hull form (S12).

At step S12, in order for the 3D printer 3 to finally model a three-dimensional object shape, when the three-dimensional object shape data 31 is data on a wire-frame model, processing is performed to add planes and thickness. In addition, when only a part of the entire hull form is modeled, processing is performed to cut out a portion to be modeled from the whole. These processing may be automatically performed, or may be manually performed by interactive communication between screen display performed by the display unit 206 and user input performed on the input unit 205.

FIG. 6 shows exemplary second screen display according to the control logic of the PC according to the present embodiment. FIG. 6 shows three-dimensional screen display of three-dimensional object shape data 31A processed at step S12 and the above-described streamline shape data 32 (see FIG. 5). Particularly, the three-dimensional object shape data 31A is represented by a solid model where thickness is added.

Returning to FIG. 4, processing proceeds to step S 13, and the modeling data generating unit 203 processes the streamline shape data 32 (S13).

At step S13, in order for the 3D printer 3 to finally model a three-dimensional object shape, when the streamline shape data 32 is line data, processing is performed, for example, to convert the line data to three-dimensional tube shape data having a diameter on the order of 2 mm. In addition, processing is performed to select and extract streamlines to be modeled from all streamline shape data 32. Furthermore, processing is performed to cut out a portion to be modeled from the whole in accordance with the three-dimensional object shape data 31A. As with the processing of the above-described three-dimensional object shape data 31, these processing may be automatically performed, or may be manually performed by interactive communication between screen display performed by the display unit 206 and user input performed on the input unit 205.

As such, by converting the streamline shape data 32 which is line data generated as a result of CFD analysis to streamline shape data 32A which is three-dimensional tube shape data, the 3D printer 3 can model fluid flow around a hull, as a three-dimensional object.

Note that upon selecting and extracting streamlines to be modeled from among all streamlines represented by the streamline shape data 32, it is desirable to extract streamlines with a large influence exerted on a shape evaluation of the hull form. An example of such streamlines includes streamlines with large curves. By extracting such streamlines and modeling the streamlines three-dimensionally, a shape evaluation of the hull form by CFD analysis can be rapidly and accurately performed.

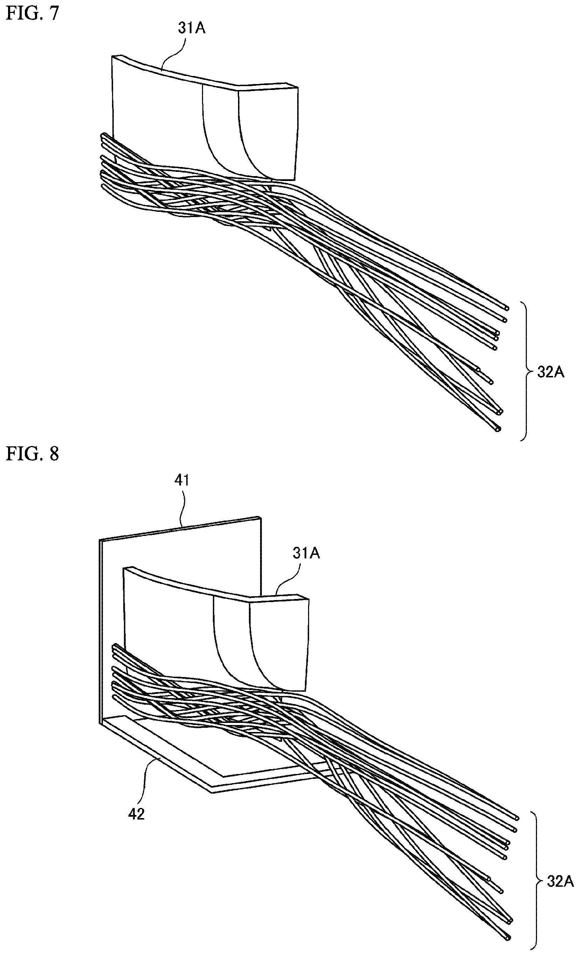

FIG. 7 shows exemplary third screen display according to the control logic of the PC according to the present embodiment. FIG. 7 shows three-dimensional screen display of the streamline shape data 32A processed at step S13 and the above-described three-dimensional object shape data 31A (see FIG. 6). Note that the streamline shape data 32A shown in FIG. 7 represents a tube shape having a predetermined diameter.

By the processes at steps S11 to S13, shape data including the three-dimensional object shape data 31A and the streamline shape data 32A, both of which are processed, is generated.

Note that when the 3D printer 3 models a three-dimensional object shape later, of the streamlines included in the streamline shape data 32A, a part of the streamline shape data 32A related to streamlines that are in contact with a hull surface of the hull form represented by the three-dimensional object shape data 31A can be modeled integrally with the three-dimensional object shape data 31A. This is because those shape data 31A and 32A are in close contact with each other. However, a problem may occur in which of the streamlines included in the streamline shape data 32A, a part of the streamline shape data 32A related to streamlines that are away in three-dimensional space from the hull surface represented by the three-dimensional object shape data 31A cannot be integrally modeled. This is because those shape data 31A and 32A are not connected to each other.

To prevent such a problem, support plane data is generated by a subsequent process at step S14 of FIG. 4. Namely, processing proceeds to step S14 of FIG. 4, and the modeling data generating unit 203 generates support plane data 41 and 42 (see FIG. 8) (S14).

At step S 14, in order to integrally model shape data including the three-dimensional object shape data 31A and the streamline shape data 32A upon final modeling of a three-dimensional object shape by the 3D printer 3, the support plane data 41 and 42 are generated that include the support plane data 41 of a support plane that can support both the hull form represented by the three-dimensional object shape data 31A and the streamlines represented by the streamline shape data 32A. As with the processing of the above-described three-dimensional object shape data 31, the generation of the support plane data 41 and 42 may be automatically performed, or may be manually performed by interactive communication between screen display performed by the display unit 206 and user input performed on the input unit 205.

FIG. 8 shows exemplary fourth screen display according to the control logic of the PC according to the present embodiment. FIG. 8 shows three-dimensional screen display of the support plane data 41 and 42 generated at step S14 and the above-described three-dimensional object shape data 31A and streamline shape data 32A (see FIG. 7).

The support plane data 41 is data on a plane that has a certain thickness and that is substantially perpendicular to a direction of the fluid flow of the hull form represented by the three-dimensional object shape data 31A. The plane represented by the support plane data 41 intersects the hull form represented by the three-dimensional object shape data 31A and all streamlines represented by the streamline shape data 32A. Therefore, three-dimensional objects represented by these support plane data 41, three-dimensional object shape data 31A, and streamline shape data 32A, respectively, can be integrally modeled.

On the other hand, the support plane data 42 is data on a horizontal plane that has a certain thickness and that extends in a direction perpendicular to the plane represented by the support plane data 41 with a lower edge of the plane represented by the support plane data 41 being a starting edge. The plane represented by the support plane data 42 corresponds to a placement stand for allowing a created modeled object to be placed on a desk, etc., later.

Note that the plane of the support plane data 41 is not limited to the plane shown in FIG. 8 as long as the plane intersects the hull form represented by the three-dimensional object shape data 31A and all streamlines represented by the streamline shape data 32A. For example, the plane may be tilted in the fluid flow direction. In addition, for example, the planes represented by the support plane data 41 may be provided at two arbitrary locations in the fluid flow direction, i.e., at an upstream-side location and a downstream-side location. In this case, the planes provided at the two locations sandwich the hull form represented by the three-dimensional object shape data 31A and all streamlines represented by the streamline shape data 32A.

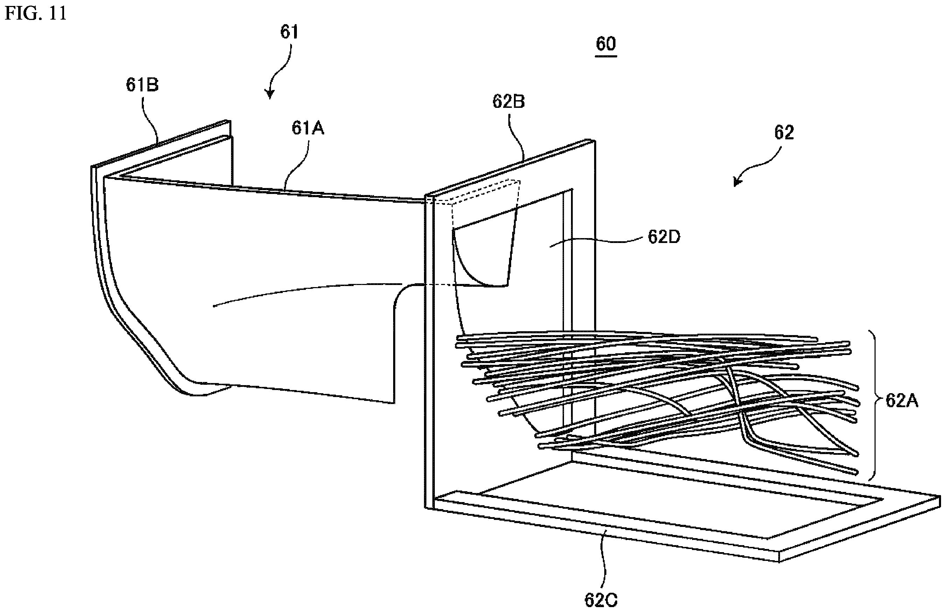

Returning to FIG. 4, processing proceeds to step S15, and the modeling data generating unit 203 performs other data processing (S15). At step S15, when other data processing is required upon final modeling of a three-dimensional object shape by the 3D printer 3, required data processing is performed. As with the processing of the above-described three-dimensional object shape data 31, the data processing may be automatically performed, or may be manually performed by interactive communication between screen display performed by the display unit 206 and user input performed on the input unit 205. An example of required data processing will be described later using FIG. 11.

By the processes at steps S12 to S15, the modeling data generating unit 203 generates modeling data for modeling, by the 3D printer 3, a three-dimensional object including a three-dimensional object of a hull form and streamlines, based on the three-dimensional object shape data 31 of a hull form and streamline shape data 32 obtained at step S11. The modeling data as used herein is data of layers where a three-dimensional object including the hull form represented by the three-dimensional object shape data 31A, the streamlines represented by the streamline shape data 32A, and the planes represented by the support plane data 41 and 42 is cut into round slices. In addition, the modeling data generating unit 203 generates control data related to the modeling of a three-dimensional object by the 3D printer 3.

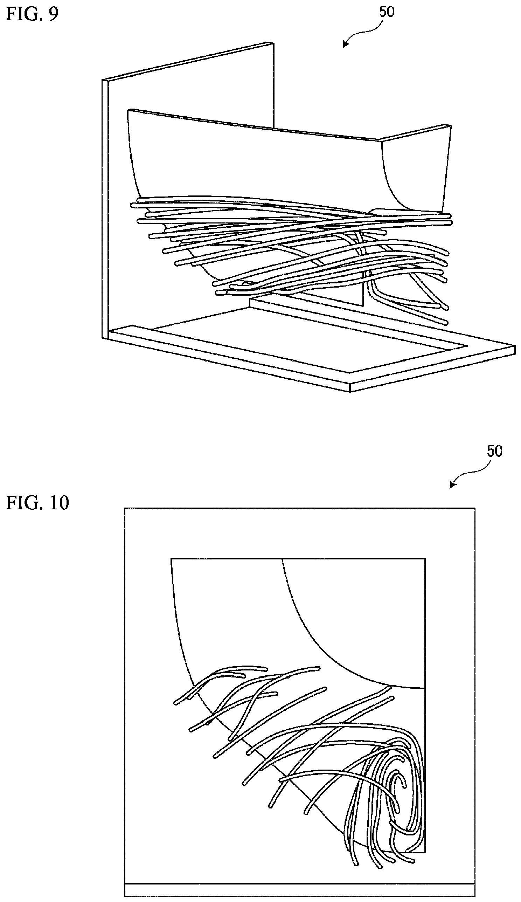

Thereafter, processing proceeds to step S16, and the data transmitting unit 204 transmits the modeling data generated by the processes at steps S12 to S15 to the 3D printer 3 (S16). Note that the 3D printer 3 models a three-dimensional object (see FIGS. 9 and 10) by layering a material such as resin, based on the transmitted modeling data.

### First example of modeled object

FIG. 9 shows a first example of a modeled object obtained by the three-dimensional modeling system according to the present embodiment. FIG. 10 is a diagram of the modeled object of FIG. 9 as viewed in a direction perpendicular to a support plane.

A modeled object 50 shown in FIG. 9 is a three-dimensional object including a hull form represented by the above-described three-dimensional object shape data 31A, streamlines represented by the above-described streamline shape data 32A, and support planes represented by the above-described support plane data 41 and 42. FIG. 10 is a diagram of the modeled object 50 as viewed from the front side of FIG. 9.

By simultaneously and three-dimensionally modeling a hull shape and fluid flow around a hull like the modeled object 50 shown in FIGS. 9 and 10, the following advantage is provided. The advantage is that a designer can recognize a relationship between the hull shape and the fluid flow around the hull, as three-dimensional information, through his/her visual and touch senses, and a shape evaluation of a hull form by CFD analysis can be more accurately performed. Therefore, compared to a generic hull form design process where the steps of hull form deign, CFD analysis, and tank testing by a model vessel are repeated, high-quality three-dimensional object design can be efficiently performed at low cost.

### Second example of modeled object

FIG. 11 shows a second example of a modeled object obtained by the three-dimensional modeling system according to the present embodiment.

In the modeled object 50 according to the above-described first example (see FIG. 9), a hull, streamlines, and support planes are created integrally as a single modeled object. The second example describes that a modeled object 60 is composed of two modeled objects 61 and 62.

As shown in FIG. 11, the modeled object 60 according to the second example is composed of the three-dimensional object 61 of a hull including a hull portion 61A and a stopping plane 61B; and the three-dimensional object 62 including streamlines 62A, a support plane 62B, and a support plane 62C. The support plane 62B has an insertion portion 62D formed therein. The insertion portion 62D is a hole for allowing the three-dimensional object 61 to be inserted thereinto and removed therefrom in a major axis direction of the three-dimensional object 61. The three-dimensional object 61 can be inserted until the stopping plane 61B abuts on a back-side surface (in the drawing) of the support plane 62B.

By modeling a hull shape and fluid flow around a hull as separate modeled objects like the modeled object 60 shown in FIG. 11, the following advantage is provided in addition to the advantage of the above-described first example. The advantage is that by separating modeled objects and recognizing each modeled object as three-dimensional information through visual and touch senses, a shape evaluation of a hull form by CFD analysis can be more accurately performed compared to the first example.

Note that a process for creating such a modeled object 60 is performed by the modeling data generating unit 203 at step S15 of FIG. 4 as other data processing (see FIG. 4). In addition, as described above, as with the processing of the three-dimensional object shape data 31, this data processing may be automatically performed, or may be manually performed by interactive communication between screen display performed by the display unit 206 and user input performed on the input unit 205.

### Third example of modeled object

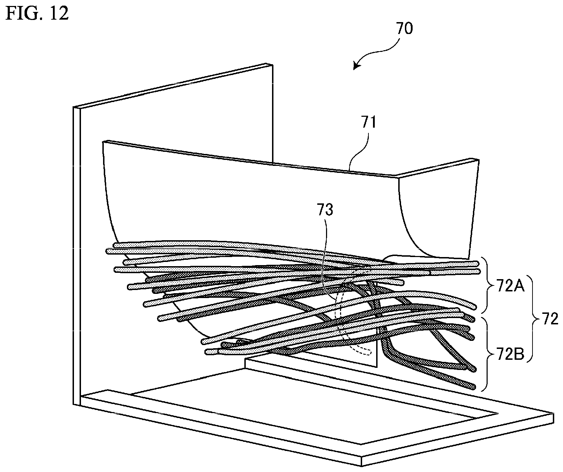

FIG. 12 shows a third example of a modeled object obtained by the three-dimensional modeling system according to the present embodiment.

The modeled object 50 according to the above-described first example (see FIG. 9) and the modeled object 60 according to the above-described second example (see FIG. 11) are premised on single-color three-dimensional modeling. The third example describes multi-color three-dimensional modeling.

As shown in FIG. 12, a modeled object 70 according to the third example includes a three-dimensional object 71 of a hull and streamlines 72. In addition, the streamlines 72 include streamlines 72A of a first color (e.g., light blue) and streamlines 72B of a second color (e.g., red). In addition, in FIG. 12, for convenience of description, the outside diameter and position of a propeller 73 mounted on the stern of a vessel are indicated by dashed lines. The streamlines 72A are streamlines passing through the outside of the outside diameter of the propeller 73, and the streamlines 72B are streamlines passing through the inside of the outside diameter of the propeller 73.

When there are a plurality of streamlines like the modeled object 70 shown in FIG. 12, by modeling the streamlines 72B which are some of the plurality of streamlines 72 with a different color than that of the other streamlines 72A, the following advantage is provided in addition to the advantages of the above-described first and second examples. The advantage is that it becomes easier to visually grasp the streamlines 72B present inside the outside diameter of the propeller 73 which are particularly important for hull form design.

Note that a process for creating such a modeled object 70 is performed by the modeling data generating unit 203 at step S15 of FIG. 4 as other data processing (see FIG. 4). Namely, when there are a plurality of streamlines, the modeling data generating unit 203 generates modeling data for modeling some of the plurality of streamlines with a different color than that of other streamlines. In addition, as described above, as with the processing of the three-dimensional object shape data 31, this data processing may be automatically performed, or may be manually performed by interactive communication between screen display performed by the display unit 206 and user input performed on the input unit 205. In addition, although the third example describes an example case in which streamlines of two colors are modeled, streamlines of three or more colors may be modeled.

As has been described above, the three-dimensional modeling system 1 according to the present embodiment includes the 3D printer 3 which is a three-dimensional modeling apparatus that models three-dimensional objects; and the PC 2 which is an information processing apparatus that transmits information about a three-dimensional object to be modeled to the 3D printer 3. The PC 2 includes the modeling data generating unit 203 that generates, based on the three-dimensional object shape data 31 representing a three-dimensional shape of a predetermined three-dimensional object (here, a hull form of a vessel) and based on the streamline shape data 32 of streamlines representing fluid flow around the predetermined three-dimensional object, modeling data for modeling, by the 3D printer 3, a three-dimensional object including the predetermined three-dimensional object and the streamlines; and the data transmitting unit 204 that transmits the modeling data generated by the modeling data generating unit 203 to the 3D printer 3. By such a configuration, a three-dimensional object and streamlines representing fluid flow around the three-dimensional object are modeled, and thus, high-quality three-dimensional object design can be efficiently performed at low cost.

Although one embodiment of the present invention is described above, the above-described embodiment merely shows one exemplary application of the present invention, and it is not intended that the technical scope of the present invention be limited to the specific configuration of the above-described embodiment.

For example, although the above description particularly provides an example case in which a three-dimensional object including a hull form of a vessel and the flow of fluid (water) around a hull of the hull form is a three-dimensional object to be modeled, the present invention is not limited to this case. A three-dimensional object is not limited to a hull form of a vessel, and may be any other three-dimensional object that serves as a subject of a wind tunnel experiment or tank testing, e.g., a plane's wing or a vehicle body.

A three-dimensional modeling system (1) includes a three-dimensional modeling apparatus (3) that models a three-dimensional object, and an information processing apparatus (2) that transmits information about a three-dimensional object to be modeled to the three-dimensional modeling apparatus (3). The information processing apparatus (2) includes modeling data generating means (203) for generating modeling data based on three-dimensional object shape data (31) representing a three-dimensional shape of a predetermined three-dimensional object and based on streamline shape data (32) of a streamline representing fluid flow around the predetermined three-dimensional object, the modeling data being for modeling, by the three-dimensional modeling apparatus (3), a three-dimensional object including the predetermined three-dimensional object and the streamline, and data transmitting means (204) for transmitting the modeling data to the three-dimensional modeling apparatus (3), the modeling data being generated by the modeling data generating means (203).

## Claims

1. A three-dimensional modeling system (1) **characterized by** comprising:
a three-dimensional modeling apparatus (3) that models a three-dimensional object; and
an information processing apparatus (2) that transmits information about a three-dimensional object to be modeled, to the three-dimensional modeling apparatus (3),
the information processing apparatus (2) including:
modeling data generating means (203) for generating modeling data based on three-dimensional object shape data (31) representing a three-dimensional shape of a predetermined three-dimensional object and based on streamline shape data (32) of a streamline representing fluid flow around the predetermined three-dimensional object, the modeling data being for modeling, by the three-dimensional modeling apparatus (3), a three-dimensional object including the predetermined three-dimensional object and the streamline; and
data transmitting means (204) for transmitting the modeling data to the three-dimensional modeling apparatus (3), the modeling data being generated by the modeling data generating means (203).

2. The three-dimensional modeling system (1) according to claim 1, **characterized in that**
the three-dimensional object shape data (31) is shape data representing a three-dimensional shape of a hull form of a vessel, and
the streamline shape data (32) is shape data representing a streamline and obtained by performing computational fluid dynamics analysis on the shape data of the hull form of the vessel.

3. The three-dimensional modeling system (1) according to claim 1, **characterized in that**
when the streamline shape data (32) is line data, the modeling data generating means (203) converts the line data to three-dimensional tube shape data having a predetermined diameter.

4. The three-dimensional modeling system (1) according to claim 1, **characterized in that**
the modeling data generating means (203) generates at least one piece of support plane data of a support plane, the support plane being capable of supporting both the predetermined three-dimensional object and the streamline.

5. The three-dimensional modeling system (1) according to claim 1, **characterized in that**
the support plane data is data on a plane, the plane being substantially perpendicular to a direction of the fluid flow of the predetermined three-dimensional object, and having a certain thickness.

6. The three-dimensional modeling system (1) according to claim 1, **characterized in that**
when the streamline comprises a plurality of streamlines, the modeling data generating means (203) generates modeling data for modeling one of the plurality of streamlines with a different color than a color of another streamline.

7. An information processing apparatus (2) **characterized by** comprising:
modeling data generating means (203) for generating modeling data based on three-dimensional object shape data (31) representing a three-dimensional shape of a predetermined three-dimensional object and based on streamline shape data (32) of a streamline representing fluid flow around the predetermined three-dimensional object, the modeling data being for modeling, by a three-dimensional modeling apparatus (3) that models a three-dimensional object, a three-dimensional object including the predetermined three-dimensional object and the streamline; and
data transmitting means (204) for transmitting the modeling data to the three-dimensional modeling apparatus (3), the modeling data being generated by the modeling data generating means (203),
the information processing apparatus (2) being configured to transmit information about a three-dimensional object to be modeled, to the three-dimensional modeling apparatus (3).
